(19) Europäisches Patentamt

European Patent Office

Office européen des brevets

(11) **EP 1 641 206 A2**

(12) **EUROPEAN PATENT APPLICATION**

(43) Date of publication:
**29.03.2006 Bulletin 2006/13**

(51) Int Cl.:
***H04L 27/26*** *(2006.01)*

(21) Application number: **05255504.2**

(22) Date of filing: **08.09.2005**

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK YU**

(30) Priority: **08.09.2004 IN MU02004963**

(71) Applicant: **Tata Consultancy Services Limited
Mumbai 400001 (IN)**

(72) Inventors:
• **Das, Suvra Sekhar
Saltlake, Kolkata (IN)**
• **Rahman, Muhammad Imadur
9220 Aalborg (DK)**
• **Fitzek, Frank Hanns Paul
9220 Aalborg (DK)**

(74) Representative: **Ablett, Graham Keith et al
Ablett & Stebbing,
Caparo House,
101-103 Baker Street
London W1U 6FQ (GB)**

(54) **Semi-blind channel estimation using sub-carriers with lower modulation order in an OFDM system**

(57) Sub-carriers carrying signalling data in an OFDM system are modulated at a lower modulation order than sub-carriers carrying traffic data. The lower modulation order provides a higher degree of reliability. These sub-carriers are then used for semi-blind channel estimation and phase tracking.

| Data Modulation Scheme | SNRmin (dB) |
| --- | --- |
| BPSK | 4 |
| QPSK | 7 |
| 16-QAM | 14 |
| 64-QAM | 20 |

FIGURE - 9

EP 1 641 206 A2

**Description**

The invention relates to a system for transmitting data in a wireless network. Particularly, the invention relates to the multi-carrier system in a wireless network.

Wireless networking technologies range from global voice and data networks, which allow users to establish wireless connections across long distances, to infrared light and radio frequency technologies, which are optimized for short-range wireless connections. The devices commonly used with wireless networking include portable computers, desktop computers, hand-held computers, personal digital assistants (PDAs), cellular phones, pen-based computers, pagers and the like. Wireless technologies serve many practical purposes. For example, mobile users can use their cellular phone to access e-mail. Travelers with portable computers can connect to the Internet through base stations installed in airports, railway stations, and other public locations. At home, users can connect devices on their desktop to synchronize data and transfer files. Wireless technology makes it possible for the user to use a wide range of devices to access data from anywhere in the world. Wireless networks reduce or eliminate the high cost of laying expensive fiber and cabling and provide backup functionality for wired networks. To ensure that wireless networks and devices are compatible, cost-effective, and secure, organizations and special interest groups are working to develop standards for wireless communications. Various organizations such as the Institute of Electrical and Electronics Engineers (IEEE), Internet Engineering Task Force (IETF), Wireless Ethernet Compatibility Alliance (WECA), and the International Telecommunication Union (ITU) participated in several major standardization efforts to lower costs and ensure interoperability. For example, IEEE working groups have defined how information is transferred from one device to another (whether radio waves or infrared light is used) and how and when a transmission medium should be used for communications. In developing wireless networking standards, organizations such as IEEE address power management, bandwidth, security, and issues which are unique to wireless networking.

Within the scope of the invention wireless network can include wireless voice networks (such as mobile telephone networks), wireless video networks, cellular digital packet data (CDPD), high speed circuit switched data (HSCSD), 1x radio transmission technology (1xRTT), general packet radio service (GPRS), multi-channel multipoint distribution service (MMDS), bluetooth, packet data cellular (PDC-P) and the like. Basically the wireless network can be:

1) Single carrier wireless system: the first-generation wireless systems based on single-carrier modulation use a single carrier frequency to transmit all data symbols sequentially. Typically, this system deals with one central frequency having a predetermined bandwidth. One limitation of single carrier system is in correcting the artifact distortion due to frequency selective fading. As the signal passes, the signal is interfered by several environmental factors such as trees, aeroplanes, tall buildings and the like which leads to the artifact distortion. Another limitation of single carrier wireless system is the requirement of high Signal to Noise Ratio (SNR) for demodulation and time-domain equalization.

2) Multi-carrier wireless system: It is a concept of splitting the bandwidth of a signal into narrow predetermined bands; modulating each of these new signals over its own frequency channel; multiplexing these different frequency channels together using orthogonal frequency division multiplexing. Orthogonal in this respect means that the signals are totally independent; it is achieved by ensuring that the null of the spectrum of sub carrier is at the peak of the other sub carriers.

The splitting of a signal in multi-carrier wireless system results in "flat fading". In many instances, the fading due to multipath will be frequency selective, randomly affecting only a portion of the overall channel bandwidth at any given time. The frequency selective fading occurs when the channel introduces time dispersion and when the delay spread exceeds the symbol period. When there is no dispersion and the delay spread is less than the symbol period, the fading will be flat, thereby affecting all frequencies in the signal equally.

The physical layer of a Multicarrier wireless system consists of blocks performing encoding, modulation and transmission over air. It also includes the blocks performing the reverse process in receiver, such as reception of analog waves, demodulation and decoding.

An important advantage of multi-carrier transmission is that inter-symbol interference due to signal dispersion (or delay spread) in the transmission channel can be reduced or even eliminated by inserting a guard time interval between the transmission of subsequent symbols, thus avoiding an equalizer as required in single carrier systems. The guard time allows delayed copies of each symbol, arriving at the receiver after the intended signal, to die out before the succeeding symbol is received.

The newer communication systems such as wireless Local area network (WLAN), wireless metropolitan area network (WMAN), ADSL (DMT = discrete multitone) systems, High Performance Local Area Network type 2 (Hiperlan/2), Mobile Multimedia Access Communication (MMAC) Systems, high speed cellular data, DAB (digital audio broadcasting) and DVB-T (digital video broadcasting) use multi-carrier type of wireless system for transmitting data.

IEEE 802.11a&g (WLAN) technologies enable users to establish wireless connections within a local area (for example, within a corporate or campus building, or in a public space, such as an airport). WLANs can be used in temporary offices or other spaces where the installation of extensive cabling would be prohibitive, or to supplement an existing LAN so that users can work at different locations within a building at different times.

IEEE 802.16a (WiMAX) technologies enable users to establish wireless connections between multiple locations within a metropolitan area (for example, between multiple office buildings in a city or on a university campus), without the high cost of laying fiber or copper cabling and leasing lines. In addition, WiMAX can serve as backups for wired networks, should the primary leased lines for wired networks become unavailable.

Orthogonal Frequency Division Multiplexing (OFDM) is a popular multicarrier transmission systems to send data bits in parallel over multiple, adjacent carriers (also called tones or bins).

OFDM has become popular in achieving very high data rates in wireless networks. High data rate "OFDM" systems till date exist for wireless local area networks. ["OFDM for wireless multimedia communications", author: Richard Van Nee & Ramjee Prasad, publisher "Artech House Publishers"].

The roots of OFDM date back to the late 1950's with the technology gaining popularity when it became the standard for digital audio broadcasting

(DAB). OFDM is a robust technique for efficiently transmitting data over a channel. Typically, OFDM is a highly efficient form of frequency division multiplexing (FDM). It is a scheme of frequency division multiplexing where sub carrier frequencies are orthogonal to each other, such that the null of the spectrum of one sub carrier is at the peak of the other sub carriers. OFDM can be viewed as either a modulation technique or a multiplexing technique.

OFDM, sometimes referred to as multi-carrier or discrete multi-tone modulation, utilizes multiple sub-carriers to transport information from one particular user to another. The technique uses a plurality of sub-carrier frequencies (sub-carriers) within a channel bandwidth to transmit the data. These sub-carriers are arranged for optimal bandwidth efficiency compared to more conventional transmission approaches, such as frequency division multiplexing (FDM), which waste large portions of the channel bandwidth in order to separate and isolate the sub-carrier frequency spectra and thereby avoid inter-carrier interference (ICI). By contrast, although the frequency spectra of OFDM sub-carriers overlap significantly within the OFDM channel bandwidth, OFDM nonetheless allows resolution and recovery of the information that has been modulated onto each sub-carrier. Typically, an OFDM-based system divides a high-speed serial information signal into multiple lower-speed sub-signals that the system transmits simultaneously at different frequencies in parallel.

An OFDM symbol is comprised of multiple sub-carriers conveying the data. Each sub-carrier can be modulated using some form of phase and amplitude modulation, including, but not limited to, Binary Phase Shift Keying (BPSK), Quadrature Phase Shift Keying (QPSK), 16 level Quadrature Amplitude Modulation (16QAM). A common feature for each of the above-mentioned modulation techniques is that the data point can be represented as a vector with a phase and magnitude on a complex plane. Modulating a sub-carrier using BPSK results in 1 bit/sub-carrier being communicated, using QPSK 2 bits/sub-carrier are communicated and using 16QAM 4 bits/sub-carrier are communicated.

Therefore setting the amplitude and phase of each bin and performing the IFFT can easily generate the orthogonal carriers required for the OFDM signal. The IFFT transforms a spectrum (amplitude and phase of each component) into a time domain signal. An IFFT converts a number of complex data points, of length which is a power of 2, into the time domain signal of the same number of points. Each data point in frequency spectrum used for an FFT or IFFT is called a bin. Each bin of an IFFT corresponds to the amplitude and phase of a set of orthogonal sinusoids, the reverse process guarantees that the carriers generated are orthogonal.

One of the most important properties of OFDM transmissions is the robustness against multipath delay spread. This is achieved by having a long symbol period, which minimises the inter-symbol interference. The level of robustness can be increased even more by the addition of a guard period between transmitted symbols. The guard period allows time for multipath signals from the previous symbol to die away before the information from the current symbol is gathered. The most effective guard period to use is a cyclic extension of the symbol. A part from the end of the symbol waveform is put at the start of the symbol as the guard period, this effectively extends the length of the symbol, while maintaining the orthogonalty of the waveform. Using this cyclic extended symbol the samples required for performing the FFT (to decode the symbol), can be taken anywhere over the length of the symbol. Typically, The Fast Fourier Transform (FFT) transforms a cyclic time domain signal into its equivalent frequency spectrum. This is done by finding the equivalent waveform, generated by a sum of orthogonal sinusoidal components. This provides multipath immunity as well as symbol time synchronization tolerance.

The benefits of OFDM are high spectral efficiency, resiliency to RF interference, and lower multi-path distortion. The orthogonal nature of OFDM allows subchannels to overlap, having a positive effect on spectral efficiency. The systems using Orthogonal Frequency Division Multiplexing (OFDM) are poised to provide high-speed broadband data services over wide-area wireless networks. The higher data rates and robust communications of OFDM enable the implementation of WLANs and WMANs supporting higher-speed applications operating over wider areas. Recently, OFDM was chosen as the modulation scheme for the European Digital Audio Broadcast (DAB) standard and the European Terrestrial Digital Video Broadcast (DVB-T) standard.

The transmission of data through a channel via OFDM signals provides several advantages over more conventional transmission techniques. One advantage is a tolerance to frequency selective fading. By including redundancy in the OFDM signal, data encoded onto fading sub-carriers can be reconstructed from the data recovered from the other sub-carriers. Another advantage is efficient spectrum usage. Since OFDM subcarriers are placed in very close proximity to one another without the need to leave unused frequency space between them, OFDM can efficiently fill a channel. A further advantage is simplified sub-channel equalization. OFDM shifts channel equalization from the time domain (as in single carrier transmission systems) to the frequency domain where a bank of simple one-tap equalizers can individually adjust for the phase and amplitude distortion of each sub-channel. Yet another advantage is good interference properties. It is possible to modify the OFDM spectrum to account for the distribution of power of an interfering signal. Also, it is possible to reduce out-of-band interference by avoiding the use of OFDM sub-carriers near the channel bandwidth edges.

OFDM systems, although known for their high spectral efficiency, are not power efficient due to linearity requirements of power amplifier and do not achieve their full potential due to practical implementation problems. In conventional communication systems, which implement adaptive modulation, the transmitter and the receiver must be synchronized with respect to the transmission parameters. In order to properly receive an OFDM signal that has been transmitted across a channel and demodulate the symbols from the received signal, an OFDM receiver must determine the exact timing of the beginning of each symbol within a data frame. Some of available resource is used for transmitting a training sequence to the receiver for the purpose of training the receiver to combat the channel and hardware impairments during communication.

Typically, the training sequence is transmitted at the beginning of each OFDM symbol, and is used at the receiver to estimate the channel coefficients. Once this operation has been carried out, time averaging is performed. The number of training OFDM symbols used for channel estimation averaging must be chosen so as to achieve a reasonable tradeoff between acquisition time and estimation accuracy. The training sequence is also used for time and frequency synchronization.

In general OFDM systems have a few pilot sub-carriers along with data subcarriers, and pilot carriers carry a known sequence to the receiver. These pilot signals are used in the receiver for channel tracking and residual phase correction of the received symbols. The disadvantage of the conventional way of transmitting data using pilot carriers over the data sub carriers decreases the spectral efficiency of the orthogonal frequency multiplexing (OFDM) systems.

U.S. Pat. No. 6628735 describes an OFDM receiver to detect and correct frequency offset. The OFDM receiver samples an incoming signal in the time domain, multiplies the sampled data by a window function to widen the main lobe of each of the predetermined subcarriers frequency domain spectrum, takes an FFT (fast Fourier transform) of the sampled signal to analyze the frequency domain samples of each predetermined subcarrier, detects a difference in magnitude of the frequency domain samples for each predetermined subcarrier, and generates a sampling frequency error based on the detected changes in magnitude.

U.S. Pat. No. 6700866 describes frequency synchronization using pilot tone signal within a predetermined frequency range and, after performing the coarse frequency correction process, performing a fine frequency correction process which adjusts receiver frequency so that the pilot tone signal is substantially aligned with a pilot tone reference within the predetermined frequency range.

U.S. Pat. No. 6701129 describes a system wherein the base station changes the transmission parameters, depending on the response received from the remote unit. It uses pilot tones ON/OFF mechanism to determine the SNR.

U.S. Pat. No. 6807147 describes a transmitter that uses the signal levels at each frequency of multiple pilot tone frequencies for synchronization. The communication system includes base units which simultaneously transmit pilot tones in a predetermined pilot tone pattern during one or more time slots of a message slot.

U.S. Pat. No. 20020159537 describes a system that uses reverse path data signal which includes a training sequence or other substantially known data which is used for pre-equalization.

U.S. Pat. No. 20030072254 describes a method of inserting pilot symbols into orthogonal sub carrier. It also discloses channel estimation improvements and reduction in the number of pilots symbols used for a MIMO system. The pilot symbols are inserted in a diamond shaped lattice pattern in time and frequency.

U.S. Pat. No. 20030103445 describes a transmitter system that adaptively changes the transmission technique based on the channel characteristics determined using inter-leaved pilot sub-carriers.

U.S. Pat. No. 20030147476 deals with estimation of symbol using pilot symbol and previous estimate of the symbol.

U.S. Pat. No. 2003016982 describes estimation of channel by using change in phase of adjacent pilot sub-carriers.

U.S. Pat. No. 20040047296 describes multi-carrier modulation system. Messages sent from the receiver to transmitter are used to exchange optimized communication parameters. These stored parameters are used to optimize the data rate for that particular receiver.

U.S. Pat. No. 20040156309 describes architecture for a receiver for pilot based OFDM systems. It discusses about the use of pilot for frequency offset correction and phase correction.

U.S. Pat. No. 20040166886 discloses wireless communications systems and, more particularly, to methods and apparatus for transmitting pilot signals in a multi-sector cell, e.g., a cell with synchronized sector transmissions. This invention also describes use of multiple pilot signals of multi-sector cells used to determine the power required to achieve a desired SNR at the WLL terminal. It discloses methods of pilot transmission in multicellular transmission.

U.S. Pat. No. 20040190637 deals with an OFDM receiver that uses pilot tones within data sub-carriers to generate the phase compensation estimate of that data symbol.

U.S. Pat. Nos. 20020031081, 20020065047, 20030016773, 20030072395, 20030081538, 20030081538, 20030128656, 20030120645, 20040131011 and 20040184399 describe the OFDM system using known pilot tones.

One disadvantage of the prior art is that the known pilot tones sent along the data sub carrier occupy the space used for the data sub carriers which decreases the data rate and results in low efficiency.

It is accordingly an object of the present invention to provide a system for transmitting data in a wireless network, which overcome the disadvantages of the prior art methods.

Another object of the invention is to provide a process and system for Enhancing Spectral Efficiency of Orthogonal Frequency Division Multiplexing (OFDM) systems by Data Transmission over Pilot Tones.

The blocks performing encoding, modulation and transmission over air are present in the physical layer of the Multicarrier system. The physical layer of the Multicarrier system also includes the blocks performing the reverse process in receiver, such as reception of analog waves, demodulation and decoding.

This invention envisages the physical Layer modulation and design of pilot tones of an OFDM system in achieving higher data rates in wireless networks.

The present invention describes a system for transmitting data in a wireless network. The Subcarriers used for data information can be called as data sub carriers. In the present invention the term "tone" and "sub carrier" are used interchangeably. It can be shown that data information can be transmitted over the pilots as well, which makes channel estimation or residual phase tracking a semi-blind process and with a modulation order less than the modulation order used on the data sub carriers. In other words, if data sub carrier are modulated using, say, 64-QAM (Quadrature Amplitude Modulation, with 64 constellation points), then, the modulation order to be used for pilot sub carriers can be BPSK (Binary phase shift keying) or QPSK (Quadrature Phase Shift Keying) or may be 8-QPSK or even 16-QAM. Similar other combinations of modulating data sub carriers and pilot sub carriers can be arrived at. {[ieee 802.11a] IEEE Std 802.11a-1999, Part 11: Wireless LAN Medium Access Control (MAC) and Physical Layer (PHY) specifications High-speed Physical Layer in the 5 GHz Band," IEEE, Tech. Rep., 1999, [ieee 802.11g] IEEE Std 802.11g.-2003, Part 11: Wireless LAN Medium Access Control (MAC) and Physical Layer (PHY) specifications Amendment 4: Further Higher Data Rate Extension in the 2.4 GHz Band, IEEE, Tech. Rep., June 2003 and [ieee 802.16a] IEEE Std 802.16a-2003, Part 16: Air Interface for Fixed Broadband Wireless Access Systems

Amendment 2: Medium Access Control Modifications and Additional Physical Layer Specifications for 211 GHz, IEEE, Tech. Rep., 2003}.

According to the invention there is provided a process for transmission of data from a transmitter to at least one receiver in an Orthogonal Frequency Division Multiplexing (OFDM) communication system having a set of sub carriers carrying modulated data, said process comprising the following steps:

i) transmitting the set of sub carriers and at least one training sequence linked to the sub carriers;

ii) utilizing at least some of the subcarriers in the set for transmission of data at a lower modulation order and the remaining sub carriers being used for transmitting data at higher modulation order;

iii) receiving the training sequence and the sub carriers at the receiver;

iv) using the training sequence to synchronize and initialize the receiver and generate first error estimation information;

v) using the first error estimation information to recover data in the lower order modulation subcarriers and generate a second error estimation information; and

vi) using the second error estimation information to recover data in the higher modulation order subcarriers.

According to another aspect of the present invention, there is provided a system for transmission of data system from a transmitter to at least one receiver in a multi-carrier Orthogonal Frequency Division Multiplexing (OFDM) communication system having a set of sub-carriers for transmission of data and at least one training sequence linked to the data sub carriers comprises:

i) at least some of the sub carriers in the set adapted to transmit data at a lower modulation order and the remaining sub carriers adapted to be used for transmitting data at higher order modulation;

ii) a means for receiving the training sequence and the sub carriers at the receiver;

iii) a first error estimation means adapted to use the training sequence to synchronize and initialize the receiver and generate first error estimation information;

iv) a second error estimation means adapted to use first error estimation information to recover data in the lower order modulation sub carriers and generate a second error estimation information; and

v) a third error estimation means adapted to use the second error estimation information to recover data in the higher modulation order sub carriers.

Typically, a portion of the said data sub carrier having the lower modulation order, has known data.
Typically, all the information in the lower modulation order is unknown data.
Typically, the data in lower modulation order is signaling data.
Typically, the lower modulation order subcarriers are used also for sending training sequence.
Typically, at least a portion of the lower modulation order data is data, which requires high degree of reliability.
Typically, the lower modulation order is BPSK (binary phase shift keying) and the higher modulation order is 64 QAM (quadrature amplitude modulation) and
Typically, the lower modulation order is QPSK (quadrature phase shift keying) and the higher modulation order is 16 QAM (quadrature amplitude modulation.
Examples of the present invention will now be described with reference to the accompanying drawings, in which:

Figure 1 illustrates an OFDM symbol;

Figure 2 illustrates a typical OFDM transmission scheme;

Figure 3 illustrates a simplified block diagram of an OFDM Transmitter;

Figure 4 illustrates a simplified block diagram of an OFDM Receiver;

Figure 5 illustrates 64-QAM constellation for data sub-carrier;

Figure 6 illustrates QPSK / BPSK constellation points for pilots with 64-QAM data modulation;

Figure 7 illustrates 16-QAM data sub carrier modulation;

Figure 8 illustrates pilot sub carrier modulation using QPSK or BPSK constellation;

Figure 9 illustrates a table, which shows minimum SNR required for various modulations;

Figure 10 illustrates BER Vs SNR plot, comparing conventional scheme (solid line), with the present invention (the dotted line) with data sub carrier modulated with 64-QAM, while pilot sub carriers modulated using BPSK;

Figure 11 illustrates BER Vs SNR plot, comparing conventional scheme (solid line), with the present invention (the dotted line) with data sub carrier modulated with 16-QAM, while pilot sub carriers modulated using QPSK; and

Figure 12 illustrates gain in efficiency Vs number of pilots and number of data sub carriers.

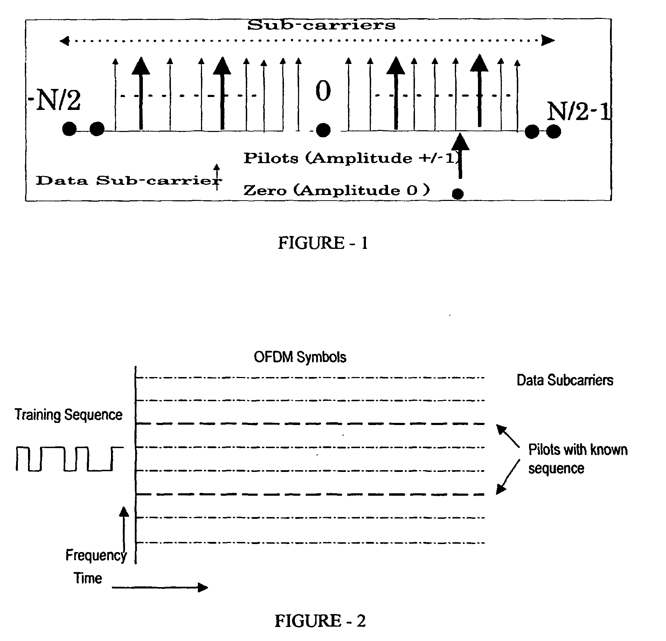

Figure 1 illustrates an OFDM symbol. A standard OFDM symbol has, say "N" number of sub-carriers. Out of these, some sub carriers are made zero to cater to filter non-idealities and transmission spectrum mask requirements. Some are used to carry useful data information while a few are kept to transmit a known sequence of symbols for the purpose of channel estimation or residual phase correction. The maximum amplitude of the pilot symbol is same as the maximum amplitude of the data sub carrier symbols. These sub carriers are known as pilot tones or pilot sub-carriers. Hence these pilot sub carriers do not carry any data information, and thus are an unavoidable source of loss of efficiency of the system.

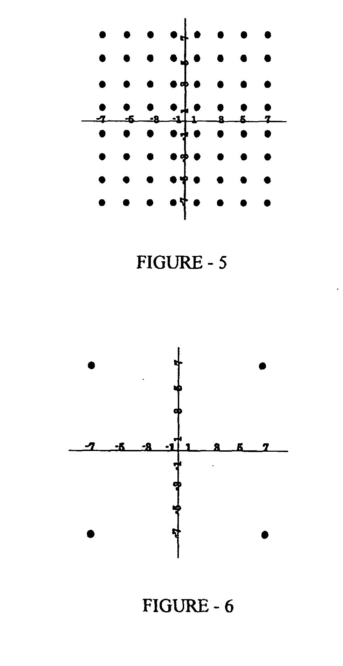

Figure 2 illustrates a typical OFDM transmission scheme showing an initial training sequence followed by a sequence of OFDM symbols. Each OFDM symbol consists of a number of subcarriers (here it is 8) out of which a few subcarriers are used as pilots (here it is 2) and the remaining subcarriers are carrying data (here there are 6 data subcarriers). The data sub-carriers are modulated using either Binary Phase Shift Keying (BPSK), Quadrature Phase Shift Keying (QPSK) or high order Quadrature Amplitude Modulation (QAM). BPSK has two constellation points (states) which can represent one bit (having two states, 0 or 1), similarly QPSK (as shown in Figure 5) has 4 constellation points which can modulate 2 bits.
In general to modulate n number of bits, it is required to use constellations having $2^n$ points (constellations having higher number of points, are higher order constellations). The process of translating bits to a constellation point is termed as Mapping and the inverse process of converting a constellation point to bits as de-mapping.

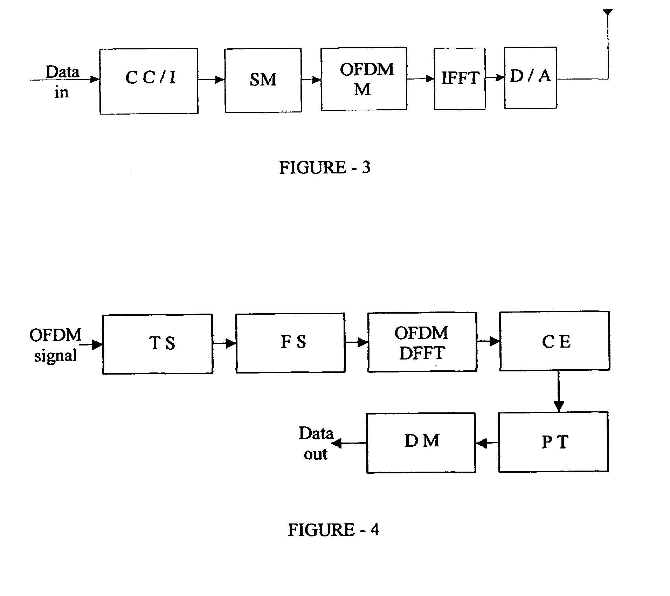

Figure 3 depicts the block diagram of a simplified transmitter. In the transmitter the data after channel coding/ interleaving and symbol mapping is modulated. The IFFT converts the frequency domain signals to time domain signals. The IFFT performs the transformation very efficiently, and provides a simple way of ensuring the carrier signals produced are orthogonal. The signals are then converted in the analog form and sent through the antenna.

The OFDM receiver structure mirrors the operation of the OFDM transmitter. A simplified block diagram of an OFDM receiver is shown in figure 4. The Time Synchronization block does the packet detection and symbol timing synchronization of the received signal. The Frequency Synchronization block does initial carrier frequency estimation and compensation. The Channel estimation and compensation is done by the Channel Equalization block (based on the initial training sequence). Then follows the residual phase correction, which is done by Phase Tracking block. The residual phase error occurs because of error in carrier frequency compensation and sampling frequency offset (SFO). The residual phase increases with OFDM symbol index. Pilot sub-carriers embedded in the OFDM symbol among the data sub-carriers enable the tracking of these errors.

In the receiver, the received OFDM symbol is demodulated using Fast Fourier Transform (FFT) and the complex value representation of the bits (corresponding to the transmitted constellation point) are extracted in each subcarrier. This will be a corrupted version of the transmit symbol due to channel effects, frequency offset and phase offset in addition to noise.

At the receiver the training sequence is utilized to synchronize and initialize the receiver and generate first error estimation information. The first error estimation information is used to recover data in the lower order modulation subcarriers and generate a second error estimation information. The second error estimation information is used to recover data in the higher modulation order subcarriers.

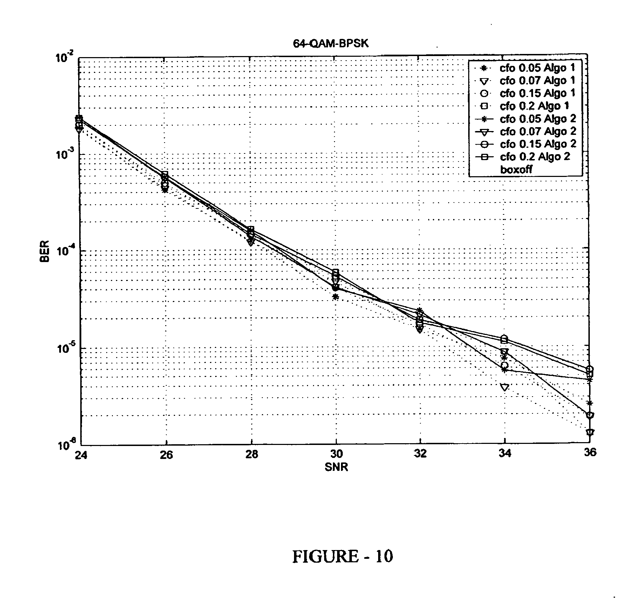

As long as the error introduced in the received constellation symbol can be corrected within an error limit, the de-mapper can correctly estimate the corresponding transmitted bit(s). This error limit depends on the distance between adjacent constellation points and hence higher order constellations have lower error limits. So the error tolerance is higher for lower order modulations and it diminishes as the order goes higher. Moreover the peak amplitude has to be same for all modulations and that results into higher signal power for lower order modulations compared to higher order. Therefore the minimum signal to noise ratio (SNR) required for BPSK is low and it goes up with the modulation order. The Table in figure 10 illustrates minimum SNR required for various modulations.

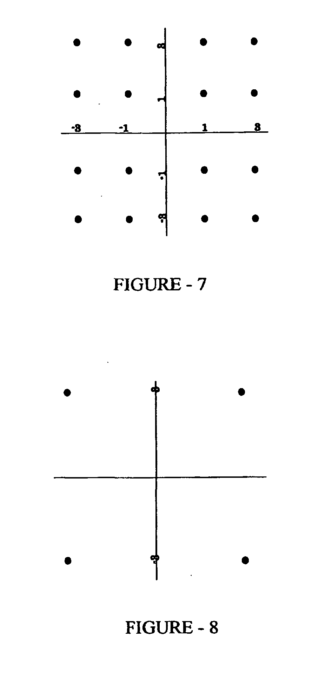

A higher order constellation having 64 points is shown in Figure 5. Figure 5 and figure 6 explain a particular situation when the normal data sub carriers are modulated using 64-QAM constellation points while the pilots are modulated with QPSK or BPSK constellation points. Similarly when 16-QAM data sub carrier modulation is used along with BPSK or QPSK pilot sub carrier modulation, the peak amplitude of both the sub carriers must be the same as is shown in figure 7 and 8.

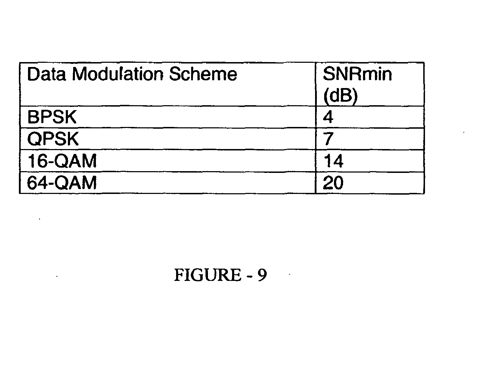

The Pilot sub-carriers are a pseudo random sequence of $\pm$ 1 [1], the sequence being known at the receiver. Pilots are the same irrespective of the modulation scheme of the data sub-carriers and are transmitted with the same power as that of data sub-carriers. The minimum SNR required by the highest order QAM (64-QAM) modulation scheme is about 16 dB more than that required by the BPSK modulation scheme to achieve a bit error rate (BER) of the order of 10-5. Hence the pilots carry more power (16dB) when a 64-QAM modulated symbol is transmitted than in the case of a BPSK modulated symbol. Same is the case for the preamble (TS). With the additional SNR the pilots enjoy with different modulations which can be recognized from table in figure 9. The $SNR_{min}$ gives the minimum required SNR for the modulation scheme.

The initial training sequences are used for packet detection, automatic gain control, Symbol Timing Offset (STO) synchronization and Carrier Frequency Estimation. Pilots carry known sequences, which are used for fine estimation and tracking of channel, frequency and phase errors.

Implementation of the present invention:

1) In transmitter, the deviation from normal OFDM system arises as follows. In the normal OFDM system the pilot sub carriers are know at both the transmitter and the receiver. In the proposed system, the data on the pilot sub carrier is generated by a data source, and thus is just like the data sub carriers. It differs from the data sub carrier though.

2) While the data sub carriers may carry channel-coded bits, the pilot sub carriers may or may not do so. If coding is done on pilot sub carrier information bits, then, it may be either streamlined with the data sub carriers or may use a parallel path.

3) The modulation order of the pilot sub carrier must be lower than that used for the data sub carriers. If the modulation order of the data sub carrier and the pilot sub carrier is the same, then it becomes a completely blind system. For example. If say QAM-64 is used for modulating the data sub carriers, the pilots sub carriers may be modulated with QPSK or BPSK.

4) At the receiver, maximum likelihood or maximum apriori based method, or its extensions or derivatives may be used to estimate the transmitted constellation point on the pilot sub carriers. This algorithm may be used for data sub carriers as well. Since the pilot sub carriers will be modulated at low modulation order, but transmitted at a high signal power (much more than required by that modulation order, since signal power on pilots is kept as that of the data sub carriers as has been indicated in the figure), the probability of detecting the correct constellation becomes very high.

5) Once the transmitted constellation point on the semi blind pilots carriers are estimated, the estimated constellations can be considered as the transmitted constellation on the pilots.

6) After this, the pilots can be used for common purpose as applicable in different situations. They may be used for channel estimation or channel tracking or residual phase tracking or the like. The initial acquisition of the parameters is expected to be done from the training sequence (the preamble) from the frame (a frame is made of several consecutive OFDM symbols). Subsequent tracking is usually done with the help of the pilot sub carriers.

7) The bits from the estimated constellation points need to be processed in correspondence with the transmitter.

An OFDM based system similar to that of IEEE 802.11 a is considered here for comparing the performance of the invented scheme. The basic system has 48 data subcarriers and 4 pilots. A study is presented to compare the proposed system when pilots carry a lower order modulated data with the conventional system where pilots do not carry any data. The residual carrier frequency offset used for simulation was corresponding to the maximum residual offset. The packet length was taken as 1000 octets.

Case 1:

Modulation of Data Subcarriers : 64 QAM
Modulation of Pilot Subcarriers : BPSK
Residual frequency error introduced: 5% to 20%
Sampling Frequency Offset: 12 ppm
Signal to Noise Ratio: 24dB to 36dB

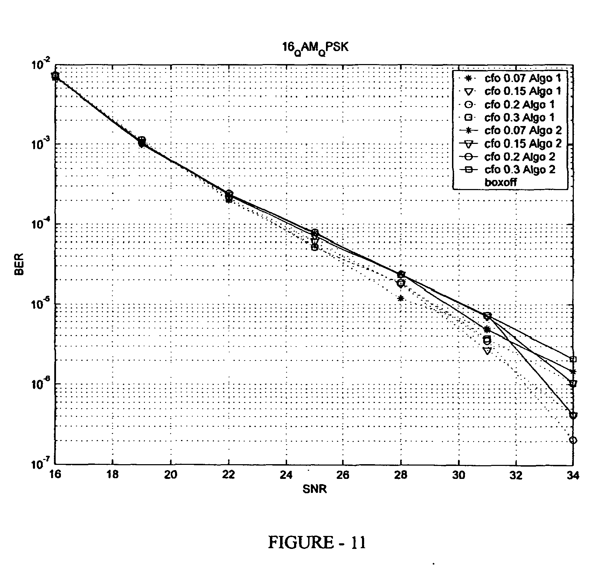

Figure 11 illustrates BER Vs SNR plot, comparing conventional scheme (solid line), with the proposed scheme (the dotted line), for different values of carrier frequency offset with a 12ppm sampling frequency offset, here data sub carrier were modulated with 64-QAM, while pilot sub carriers were modulated using BPSK. There is no deterioration of BER performance.

Case 2:

Modulation of Data Subcarriers : 16 QAM
Modulation of Pilot Subcarriers : QPSK
Residual frequency error introduced: 5% to 20%

Sampling Frequency Offset: 12 ppm
Signal to Noise Ratio: 16dB to 34dB

Figure 11 illustrates BER Vs SNR plot, comparing conventional scheme (solid line), with the proposed scheme (the dotted line), for different values of carrier frequency offset with a 12ppm sampling frequency offset , here data sub carrier were modulated with 16-QAM, while pilot sub carriers were modulated using QPSK.There is no deterioration of BER performance while achieving an enhancement of 4% throughput.

Several other combinations of data and pilot sub carrier modulation were also tested and under similar conditions

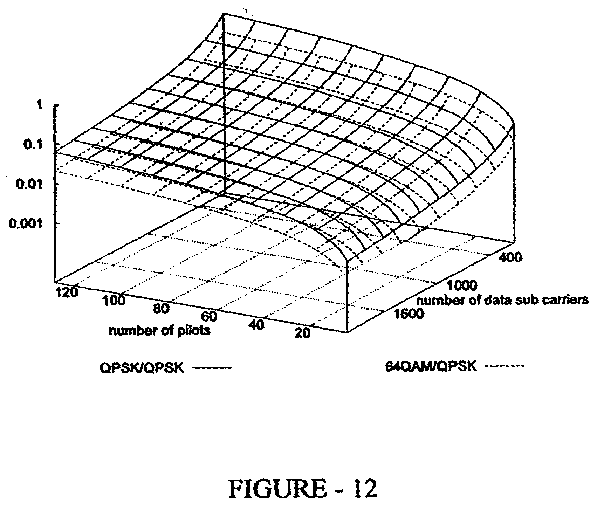

Figure 12 gives the limits of the gain that can be achieved with different modulation schemes. The solid line gives the highest gain, while the dotted line gives the lowest possible gain with the proposed scheme. With other modulation combinations, the gain will lie between these two limits. With different combinations of number of data sub carriers and pilot sub carriers, different gains can be achieved. This brings out the variation of the gain as a function of the number of pilots, data sub carriers and modulation order.

Suppose a system has the following parameters:

o Number of points in Fast Fourier Transform (used to implement an OFDM modem) = "N"
o Number of pilot sub carriers = $N_p$
o Number of data sub carriers = $N_d$
o Number of bits per data sub carrier (depends on Modulation scheme) = $b_d$
o Number of bits per pilot sub carrier = $b_p$

Then,
Increase in number of bits transported in one OFDM symbol = $N_p . b_p$ Total number of bits carried in one OFDM symbol in the system using a known sequence for pilots = $N_d . b_d$

Therefore, percentage increase in the efficiency can be stated as

$$100. (N_p . b_p / N_d . b_d)$$

The advantages of the proposed scheme can be viewed in two different ways:

1. It increases the spectral efficiency of pilot based OFDM systems
2. It increases signal power which in turn increases SNR
3. It provides a second parallel data path

Hence the usage of the scheme can be in either way. It can be used to transmit additional data bits in one OFDM symbol and thus providing an increase in the data rate without increasing the bandwidth of the transmission, power.

The other advantage of the scheme is to use it as a parallel channel for transmitting another low data rate application. These can be even control information or administrative information. This way the overhead of the need for a separate control channel resource can be avoided. Sometimes applications have heterogeneous data types, i.e. one part may have a high data rate (video) and another low data rate (tele-text) or an Internet html page as is common in interactive televisions. In such situation, the two different data can be easily separated into two separate channels. The proposed scheme can support several such innovative future applications.

Whereas many alterations and modifications of the present invention will no doubt become apparent to a person of ordinary skill in the art after having read the foregoing description, it is to be understood that any particular embodiment shown and described by way of illustration is in no way intended to be considered limiting.

## Claims

1. A process for transmission of data from a transmitter to at least one receiver in a multi-carrier Orthogonal Frequency Division Multiplexing (OFDM) communication system having a set of sub carriers carrying modulated data, said process comprising the following steps:

   i) transmitting the set of sub carriers and at least one training sequence linked to the sub carriers;
   ii) utilizing at least some of the subcarriers in the set for transmission of data at a lower modulation order and the remaining sub carriers being used for transmitting data at higher modulation order;
   iii) receiving the training sequence and the sub carriers at the receiver;
   iv) using the training sequence to synchronize and initialize the receiver and generate first error estimation information;
   v) using the first error estimation information to recover data in the lower order modulation subcarriers and generate a second error estimation information; and
   vi) using the second error estimation information to recover data in the higher modulation order subcarriers.

2. A system for transmission of data from a transmitter to at least one receiver in a multi-carrier Orthogonal Frequency Division Multiplexing (OFDM) communication system having a set of subcarriers for transmission of data and at least one training sequence linked to the data sub carriers said system comprising:

   (i) at least some of the sub carriers in the set adapted to transmit data at a lower modulation order and the remaining sub carriers adapted to be used for transmitting data at higher order modulation;
   (ii) a means for receiving the training sequence and the sub carriers at the receiver;
   (iii) a first error estimation means adapted to use the training sequence to synchronize and initialize the receiver and generate first error estimation information;
   (iv) a second error estimation means adapted to use first error estimation information to recover data in the lower order modulation sub carriers and generate a second error estimation information; and
   (v) a third error estimation means adapted to use the second error estimation information to recover data in the higher modulation order sub carriers.

3. A system according to claim 2, wherein a portion of the data sub carrier having the lower modulation order, has known data.

4. A system according to claim 2, wherein all the information in the lower modulation order is unknown data.

5. A system according to any of claims 2 to 4, wherein the data in the lower modulation order is signaling data.

6. A system according to any of claims 2 to 5, wherein the lower modulation order subcarriers are also used for sending training sequence.

7. A system according to any of claims 2 to 6 for enhancing spectral efficiency, wherein at least a portion of the lower modulation order data is data which requires a high degree of reliability.

8. A system according to any of claims 2 to 7, wherein the lower modulation order is BPSK (binary phase shift keying) and the higher modulation order is 64 QAM (quadrature amplitude modulation).

9. A system according to any of claims 2 to 7, wherein the lower modulation order is QPSK (quadrature phase shift keying) and the higher modulation order is 16 QAM (quadrature amplitude modulation).

FIGURE - 1

FIGURE - 2

Data in → [ C C / I ] → [ SM ] → [ OFDM M ] → [ IFFT ] → [ D / A ] → ▼

FIGURE - 3

OFDM signal → [ T S ] → [ F S ] → [ OFDM DFFT ] → [ C E ]

Data out ← [ D M ] ← [ P T ]

FIGURE - 4

FIGURE - 5

FIGURE - 6

FIGURE - 7

FIGURE - 8

| Data Modulation Scheme | SNRmin (dB) |
|---|---|
| BPSK | 4 |
| QPSK | 7 |
| 16-QAM | 14 |
| 64-QAM | 20 |

FIGURE - 9

FIGURE - 10

FIGURE - 11

FIGURE - 12